# EUROPÄISCHE PATENTANMELDUNG

(11) **EP 1 782 982 A2**
(43) Veröffentlichungstag der Anmeldung: **09.05.2007**
(21) Anmeldenummer: 06123493.6
(22) Anmeldetag: 04.11.2006
(51) Int. Cl.: B60J 5/06

(54) **Kraftfahrzeug mit fremdbetätigter Schiebetür und Schließzustandsüberwachung eines Fenstermoduls**

(30) Priorität: 04.11.2005 DE 102005053051
(71) Anmelder: DURA Automotive Body & Glass Systems GmbH & Co. KG, 58840 Plettenberg (DE); DaimlerChrysler AG, 70327 Stuttgart (DE)
(72) Erfinder: Kraus, Jürgen, 58802, Balve (DE); Gerndorf, Ralf, 57413, Finnentrop (DE); Lapschies, Carsten, 71384, Weinstadt-Endersbach (DE)
(74) Vertreter: Bungartz, Klaus Peter

(57) **Zusammenfassung**

Bei einer Kombination von Schiebetüren und öffnungsfähigen Fenstern ist es jedoch möglich, dass durch ein geöffnetes Fenster in den Verfahrbereich der Schiebetür hineinragende Fremdkörper von der Schiebetürbewegung erfaßt werden. Um das Risiko von Verletzungen oder Sachbeschädigungen zu minimieren, wird vorgeschlagen, vor und/oder während der Öffnung der Schiebetür (1) den Schließ- und/oder Öffnungszustand der Fensters (4) zu erfassen und abhängig vom erfaßten Schließzustand des Fensters (4) die Öffnungs- oder Schließbewegung der Schiebetür (1) zuzulassen, zu verzögern, zu unterbinden oder in diese einzugreifen.

## Beschreibung

### Technisches Gebiet

Die Erfindung betrifft Kraftfahrzeug mit zumindest einer längs einer Seite des Kraftfahrzeugs verfahrbaren, über eine Fremdkraft betätigten Schiebetür, die während einer Öffnungs- und Schließbewegung einen Verfahrbereich durchfährt, sowie zumindest einem in der Schiebetür oder in dem feststehenden Teil der Fahrzeugkarosserie angeordneten Fenstermodul mit einem wenigstens teilweise innerhalb des Verfahrbereichs angeordneten, öffnungs- und schließfähigen Fenster, wobei das Kraftfahrzeug Steuermittel zum Vermeiden eines unbeabsichtigten Einklemmen von Fremdkörpern oder Körperteilen aufweist.

### Stand der Technik

Solche Kraftfahrzeuge sind allgemein bekannt. Insbesondere weisen Minivans, SUVs, Kleinbusse und Kleintransporter auf einer oder auf beiden Fahrzeugseiten Schiebetüren auf. Schiebetüren bieten sich allerdings auch bei anderen Fahrzeugklassen an, da sie ein bequemes Einsteigen ermöglichen und bei vollständiger Öffnung einen großen Einstiegsbereich freigeben und durch eine karosserienahe Führung nur einen geringen, karosserienahen Verfahrbereich zur Öffnungs- und Schließbewegung beanspruchen.

Üblicher Weise weisen Fahrzeuge, die mit Schiebetüren ausgestattet sind, auch Fenstermodule in der Schiebetür oder in der feststehenden Fahrzeugkarosserie in unmittelbarer Nähe zum Verfahrbereich auf. Bei einigen dieser Fahrzeuge ist auch das Öffnen und Schließen von im Fenstermodul angeordneten Fenstern möglich. Ein Fenstermodul mit einem öffnungs- und schließfähigen Fenster umfasst zumindest eine bewegliche Fensterscheibe sowie Mittel zum Öffnen und Schließen des Fenstermoduls bzw. Fensters. Bei in der Schiebetür angeordneten Fenstermodulen werden bevorzugt Schiebefenstermodule oder Schwenkfenstermodule verbaut.

Ebenfalls allgemein bekannt ist die Möglichkeit, Fenstermodule und Schiebetüren derart auszugestalten, dass die Öffnungs- und Schließbewegung fremdkraftbetätigt ist, dass heißt auf Anforderung selbsttätig, insbesondere elektromotorisch angetrieben, ausgeführt wird. Grundsätzlich sind aber auch hydraulische oder pneumatische Betätigungen der Bewegungsvorgänge denkbar.

Bei fremdkraftbetätigten Ausführungen sollte darauf geachtet werden, dass ein ungewöhnlicher Widerstand, der der Bewegung entgegensteht, erkannt und die Fremdkraftbetätigung unterbrochen und/oder die Bewegungsrichtung umgekehrt wird. Bei diesen Überlegungen stehen mögliche Verletzungen von Personen durch eingeklemmte Körperteile im Vordergrund. Dabei sind Kinder in der Regel besonders gefährdet, da sie sich zum einen der Gefahren oft nicht bewusst und zum anderen auch verletzlicher und weniger kräftig als Erwachsene sind. Aber auch bei eingeklemmten Gegenständen ist von Bedeutung, dass das Einklemmen eines Fremdkörpers während einer Öffnungs- oder Schließbewegung erkannt wird, um mögliche Beschädigungen am Fremdkörper oder am Fahrzeug zu vermeiden.

Bei den oben genannten Kraftfahrzeugen werden allerdings nur innerhalb des Fenstermoduls bzw. zwischen Schiebetür und Karosserie eingeklemmte Personen oder Gegenstände erkannt. Weist ein Kraftfahrzeug jedoch sowohl eine Schiebetür als auch ein öffnungs- und schließfähiges Fenstermodul in der Schiebetür oder in einem feststehenden Teil der Fahrzeugkarosserie und in unmittelbarer Nähe des Verfahrbereichs der Schiebetür auf, kann es passieren, dass Personen oder Gegenstände beispielsweise durch ein geöffnetes Fenster hindurch und aus dem Kraftfahrzeug hinaus in den Verfahrbereich der Schiebetür hineinragen. So können Personen oder Gegenstände auch zwischen Fenster und feststehender Karoserie eingeklemmt werden, etwa wenn bei der Öffnungsbewegung zwischen der Schiebetür und Teilen der feststehenden Karosserie eine Scherstelle gebildet wird.

Auch können Personen oder Gegenstände, die durch ein in unmittelbarer Nähe des Verfahrbereiches angeordnetes geöffnetes Fenster in den Verfahrbereich der Schiebetür hineinragen von Außenbereichen der sich bewegenden Schiebetür erfaßt werden. Gleiches gilt auch für eine Fensterscheibe eines Kipp- oder Schwenkfensters selbst, die in den Verfahrbereich der Schiebetür hineinragt oder, sofern die Fensterscheibe teil der Schiebetür ist, aus dem Verfahrbereich derart hinausragt, dass eine Kollision mit feststehenden Teilen der Karosserie beim Öffnen oder Schließen der Schiebetür möglich ist.

Bei fremdkraftbetätigten Schiebetüren ist ferner zu bedenken, dass aufgrund ihres Gewichts relativ große Kräfte zum Schließen und Öffnen erforderlich sind. Eine Schiebetür muss auch dann verfahren und geöffnet bzw. geschlossen werden können, wenn das Fahrzeug an einem Gefälle oder einer Steigung steht und somit die Tür eine Höhendifferenz überwinden muß. Die hierfür nötigen Kräfte unterscheiden sich jedoch je nach Öffnung bzw. Schließung gegen oder mit einer Neigung des Fahrzeugs erheblich. Durch diese Kraftdifferenzen ist es jedoch schwierig, die kritische Kraft zu bestimmen, bei der ein kritischer Zustand durch eingeklemmte Fremdkörper erkannt wird.

Während eine Person bei der manuellen Öffnung einer Schiebetür den Verfahrbereich der Schiebetür im Blickfeld hat und in diesen Verfahrbereich hineinragende Fremdkörper leicht erkennt, ist bei fremdkraftbetätigten Schiebetüren zu berücksichtigen, dass eine Aktivierung der Öffnungs- oder Schließbewegung von getrennt von der Schiebetür befindlichen Orten ausgelöst werden kann, zum Beispiel vom Fahrersitz aus oder bei einem allgemeinen Schließbefehl der zentralen Bordelektronik, beispielsweise bei verlassen des Fahrzeugs. Oft ist daher der Person, welche die Bewegung der Schiebetür veranlasst, nicht bewusst, was genau im Verfahrbereich der Schiebetür vorgeht.

Bei fremdkraftbetätigten Schiebetüren mit gleichzeitiger Anordnung eines Fensters im Verfahrbereich der Schiebetür tritt weiter das Problem auf, daß Körperteile oder Fremdkörper nicht nur zwischen Tür und Karosserie eingeklemmt werden können, sondern daß auch an der Fensterkante ein einklemmen möglich ist. Während der Verschiebemechanismus des Fensters selbst meist eine ausreichende Abschaltautomatik aufweist, drückt der Antrieb der Tür jedoch mit erheblich höheren Kräften gegen die Tür.

Wird nun die Schiebetür derart weit bewegt, daß das Fenster in Überdeckung mit Teilen der Karosserie gerät, kann zwischen dem Rand des Fensters und diesem Karosserieteil ebenfalls ein Fremdkörper eingeklemmt werden. Nun ist aber nicht der Antrieb des Fensters für dieses Einklemmen verantwortlich, sondern die kritische Bewegung wird von dem sehr viel stärkeren Antrieb der Tür ausgelöst. Während bei Einklemmen des Fremdkörpers zwischen Tür und Karosserie möglicherweise die Abschaltautomatik noch reicht, um Verletzungen zu vermeiden, drückt jedoch der Fensterrand bei Einklemmen zum Beispiel einer Kinderhand zwischen Fenster und fest stehendem Karosserieteil mit einer sehr viel geringeren Kantaktfläche auf die Kinderhand.

### Darstellung der Erfindung

### Technische Aufgabe

Aufgabe der Erfindung ist es daher, ein Kraftfahrzeug der oben genannten Art zu schaffen, bei dem die Wahrscheinlichkeit von Verletzungen oder Beschädigungen verringert ist.

### Technische Lösung

Diese Aufgabe wird nach der Erfindung dadurch gelöst, dass die Steuermittel derart ausgebildet sind, daß sie den Schließ- und/oder Öffnungszustand des Fensters zu erfassen und abhängig vom erfaßten Schließzustand des Fensters eine Bewegung der Schiebetür zumindest in Schließrichtung durch Unterbrechen oder Reduzieren der Fremdkraft im Falle eines gefährdeten Zustandes zu verhindern und/oder zu stoppen vermögen, wobei der gefährdete Zustand dadurch definiert ist, daß die Schiebetür bei geöffnetem Fenster vor eine von dem Fenster freigegebene Öffnung in dem Fenstermodul zu verfahren droht.

Eine weitere Aufgabe der Erfindung liegt in der Bereitstellung eines Fenstermoduls zum Aufbau des oben genannten Kraftfahrzeugs sowie in der Bereitstellung eines Verfahrens zum sicheren Schließen einer Schiebetür. Diese beiden Aufgaben werden durch die Ansprüche 17 und 24 gelöst.

### Vorteilhafte Wirkungen

Durch das so ausgebildete Kraftfahrzeug werden nun Mittel zur Verfügung gestellt, die es erlauben, den Öffnungs- und Schließvorgang der Schiebetür vom Schließzustand des Fensters abhängig zu machen. Je nach Kontroll- bzw. Steuerungsstrategie kann der Öffnungs- oder Schließvorgang entweder ganz unterbunden, verzögert oder anderweitig beeinflusst werden, so dass der gefährdete Zustand mit einer Gefahr von Verletzungen und/oder Sachbeschädigungen von vorne herein ausgeschlossen oder zumindest minimiert ist.

Vorteilhaft ist insbesondere die Verzögerung des Bewegungsbeginns der Schiebetür bis zu dem Zeitpunkt, an dem alle Fenster im kritischen Bereich vollständig oder zumindest so weit geschlossen sind, dass nicht mehr von einer Verletzungs- oder Sachbeschädigungsgefahr auszugehen ist. Ebenfalls denkbar ist es, die genaue Position der geöffneten Fensterscheibe zu erfassen und die Schiebetürbewegung nur bis zu einer Position zuzulassen, bei der eine Verletzungs- oder Sachbeschädigungsgefahr nicht zu befürchten ist. Insbesondere bei mehreren vorhandenen Fenstermodulen kann auch eine Unterscheidung der Fenstermodulpositionen vorgenommen werden, so dass je nach betroffenem Fenstermodul ein unterschiedlicher Verfahrweg der Schiebetür zugelassen wird.

Eine sinnvolle Anwendung der Erfindung sieht ferner vor, die Schließ- und Öffnungsbewegungen der Schiebetür und der Fenster aufeinander abzustimmen. So kann bei einer weiteren Ausgestaltung der Erfindung die Schiebetür bereits während des Schließvorgangs eines Fensters anfahren, bei Erreichen des Fensters verlangsamt oder gestoppt werden, bis der Verfahrweg wieder frei ist und dann selbsttätig wieder beschleunigen. Auch denkbar ist, dass das Öffnen eines Fensters während der Öffnungs- oder Schließbewegung der Schiebetür erkannt wird und die Schiebetürbewegung umgehend gestoppt wird.

Ein weiterer Vorteil der Erfindung liegt darin, dass die ohnehin vorhandenen Ausstattungsmerkmale eines gattungsgemäßen Kraftfahrzeugs übernommen und für die Erfindung genutzt werden können. Eine wesentliche Aufrüstung des Kraftfahrzeugs mit neuen Komponenten ist meist erforderlich.

Darüber hinaus kann ein erfindungsgemäßes Kraftfahrzeug um Ausstattungsvarianten, auf die man bei gattungsgemäßen Kraftfahrzeugen bisher verzichtet hat (z.B. im geöffneten Zustand in den Verfahrbereich der Schiebetür hineinragende Schwenk- oder Kippfenster), nun verbaut werden.

In unmittelbarer Nähe des Verfahrbereichs der Schiebetür bedeutet dabei, dass das Fenstermodul derart nah am Verfahrbereich angeordnet ist, dass eine Öffnung des Fensters es Gegenständen, einschließlich der Fensterscheibe des geöffneten Fensters selbst, oder Personen ermöglicht, durch das Fenster hindurch in den Verfahrbereich der Schiebetür zu gelangen.

Es kann vorgesehen sein, dass die Steuermittel zumindest einen Sensor zur Erfassung des Schließ- und/oder Öffnungszustands der Fenster umfassen. Ebenso können die Steuermittel zumindest einen Sensor zur Erfassung des Schließ- und/oder Öffnungszustands der Schiebetür umfassen.

Als Sensoren kommen beispielsweise Magnetschalter, Mikroschalter, Lichtschranken oder Widerstands- bzw. Induktionswegsensoren in Betracht. Letztlich wird man sich je nach Sensoranordnung, zu erfassender Messgröße, Sensorpositionierung und weiterer üblicher zu berücksichtigender Faktoren für eine geeignete Schließ- bzw. Öffnungszustandserfassung entscheiden. Es bieten sich auch Sensoren an, die die Rotation eines Bauteils erfassen und so Rückschlüsse auf die Bewegung und Position der Fenster oder Schiebetür zulassen. Ein solcher Sensor kann beispielsweise mit der Antriebswelle eines Elektromotors, der als Antriebseinheit dient, gekoppelt sein. Die Sensorsignale werden bevorzugt auf bekannte Weise übertragen, also vorzugsweise kabelgebunden oder über übliche Funktechniken.

Von Bedeutung ist ferner, dass die Steuermittel eine Steuereinheit zur Steuerung der Öffnungs- und Schließvorgänge und zur Verarbeitung von Signalen von Sensoren zur Erfassung der Öffnungs- bzw. Schließzustände der Schiebetür und der Fenster umfassen. Hierbei kann insbesondere auf eine Steuereinheit zurückgegriffen werden, die im Fahrzeug vorhanden ist. Es ist lediglich eine Funktionserweiterung erforderlich.

In einer weiteren Ausgestaltung kann vorgesehen sein, dass die Steuermittel Blockiereinrichtungen umfassen, die die Bewegung der Schiebetür ganz oder teilweise unterbinden. Diese Blockiereinrichtungen können beispielsweise dadurch gebildet sein, dass bei einem geöffneten Fenster eine Freigabe zur Fremdkraftbetätigung der Schiebetür auf elektronischem Wege durch die Steuereinheit unterdrückt wird. Auch können Antriebseinrichtungen (z.B. Elektromotoren, Hydraulik- oder Pneumatikzylinder), die für die fremdkraftbetätigte Bewegung der Schiebetür vorgesehen sind, die Blockiereinrichtung bilden, in dem die Antriebseinrichtung mechanisch blockiert wird oder selbst als Blockiereinrichtung herangezogen werden. So kann vermieden werden, dass eine nicht vollständig geöffnete Schiebetür versehentlich durch Unachtsamkeit oder Unwissen manuell weiter geöffnet wird, als die Steuerung es zulassen würde.

Dennoch kann darauf zu achten sein, die Steuermittel derart auszugestalten, dass sie einen manuellen, nicht fremdkraftbetätigten Öffnungs- oder Schließvorgang zulassen. Auch bei einem Ausfall oder einer Fehlfunktion der Steuermittel sollte es gewährleistet sein, dass die Schiebetür zu öffnen ist, auch wenn zum Beispiel die Blockiermittel aktiviert sind. Dies ist erforderlich, um etwa bei Gefahren wie einem Brand im Fahrzeug einen schnellen Fluchtweg oder bei einer unfallbedingten Bergung den Zugang zu ermöglichen. Auch kann schlicht zur Gewährleistung einer möglichst uneingeschränkten Nutzung des Kraftfahrzeugs auch bei einem Systemausfall eine manuelle Bedienbarkeit der Schiebetür wünschenswert sein.

Die manuelle Bedienbarkeit kann in besonders einfacher Weise dadurch erreicht werden, dass die Blockiermittel eine manuelle Bewegung nicht vollständig blockieren, sondern lediglich erschweren. Die Blockiermittel können dabei von einem Elektromotor selbst gebildet werden, dessen innerer Widerstand einer manuellen Bewegung der Schiebetür entgegensteht.

Insbesondere wenn die Schiebetürbewegung bei geöffneten Fenstern nicht gänzlich blockiert werden soll, umfassen die Steuermittel vorzugsweise Verzögerungseinrichtungen, die eine Bewegung der Schiebetür bis zu einem Zeitpunkt verzögern, in dem eine Bewegung Schiebetür gefahrlos möglich ist. Die Verzögerungseinrichtungen können, beispielsweise gesteuert über die Steuereinheit, die Freigabe der Femdkraftbetätigung solange verzögern, bis die Schließung der Fenstermodule zumindest so weit erfolgt ist, dass eine gefahrlose Öffnung oder Schließung der Schiebetür möglich ist.

Zur Bedienung der Schiebetür und der Fenstermodule sind Aktivierungsmittel zum Starten des Öffnungs- bzw. Schließvorgangs der Fenster oder der Schiebetür vorgesehen. Diese können durch übliche Betätigungsschalter gebildet sein. Durch ein Zusammenwirken der Blockierungsmittel, der Verzögerungsmittel und der Aktivierungsmittel kann erreicht werden, dass bei Betätigung eines Aktivierungsmittels zunächst die Schließzustände der Fenstermodule und/oder der Schiebetür über die Sensoren erfaßt werden.

Je nach erfaßten Schließzuständen wird dann gemäß einer in der Steuereinheit hinterlegten Steuerstrategie entschieden, ob die angeforderte Aktivierung eines Öffnungs- oder Schließvorgangs zugelassen wird, ob gegebenenfalls zunächst Fenster zu schließen sind oder bis zu welcher Position eine Öffnung zugelassen wird. Wird ein fremdkraftbetätigter Öffnungsvorgang einer Schiebetür angefordert, kann somit zunächst automatisch ein Schließvorgang der Fenstermodule vorgeschaltet werden. Auch die Türgriffe der Schiebetür können dabei als Aktivierungsmittel dienen. Beispielsweise kann die Betätigung des Türgriffs zunächst nur einen Schließvorgang der Fenster in Gang setzen, bevor eine Bewegung der Schiebetür gestartet wird. Gleiches ist selbstverständlich auch über eine Fernbedienung möglich.

Um auch eine Öffnung der Fenster bei bereits geöffneter Schiebetür zu unterbinden oder nur soweit zuzulassen, dass bei Schließen der Schiebetür keine Gefahr von Verletzungen oder Beschädigung besteht, können Kontrolleinrichtungen für die Fenster vorgesehen sein. Denn ein nach Öffnung der Schiebetür geöffnetes Fenster, das in den Verfahrbereich der Schiebetür hineinragt, kann leicht übersehen werden.

Zu Informationszwecken können akustische oder optische Signalgeber vorgesehen sind, die ein Eingreifen der Steuermittel in die Schiebetürbewegung oder deren Unterbinden oder Verzögern durch die Steuermittel anzeigen. Beispielsweise kann eine Stimme zum Schließen der Fenster auffordern und darüber informieren, dass die fremdkraftbetätigte Öffnung der Tür erst dann möglich ist, wenn die Fenster geschlossen sind. Oder es ertönt zum Beispiel ein akustisches Signal während die Fenster automatisch geschlossen werden, um über die Verzögerung des Öffnungs- oder Schließvorgangs zu informieren. Ebenso können natürlich auch optische Signale oder optische und akustische Signale nebeneinander verwendet werden.

Das Fenstermodul kann ein Schiebefenstermodul und/oder ein Hebe/Senkfenstermodul und/oder ein Kippfenstermodul und/oder ein Schwenkfenstermodul sein. Das Fenstermodul weist dabei vorzugsweise den Sensor zur Erfassung des Schließ- und/oder Öffnungszustands des Fensters in einer Führungsschiene der beweglichen Fensterscheibe und/oder in einer vorzugsweise in oder an einer am Fensterrahmen des Fenstermoduls angeordneten Scheibenaufnahme des Fenstermoduls auf. Bei den Schwenk- bzw. Kippfenstern kann die Erfassung des Schließ- und/oder Öffnungszustands auch über Scharnierelemente erfolgen, deren Relativbewegungen oder Schließzustände von einem Sensor erfaßt werden.

Eine besonders einfache Steuerung und Abstimmung einzelner Schließ- und Öffnungsvorgänge von Fenstern und der Schiebetür kann erreicht werden, wenn das Fenstermodul ein fremdkraftbetätigtes Fenster aufweist. Bei manuell betätigten Fenstern ist zwar die Erfassung des Schließzustandes möglich, nicht jedoch die Initiierung eines automatischen Schließvorgangs vor Schließung oder Öffnung der Schiebetür mittels der Steuermittel. Ebenfalls könnte eine Öffnung der Fenster bei geöffneter Schiebetür nur durch mechanische Mittel erreicht werden, die jedoch aufwendiger zu realisieren sind als eine Steuerung und Überwachung auf elektronischem Weg. Die Fremdkraftbetätigung erfolgt dabei vorzugsweise elektrisch über Elektromotoren, kann aber grundsätzlich auch pneumatisch oder hydraulisch erfolgen.

Ebenfalls als zur Erfindung gehörig werden ein Fenstermodul sowie ein Schiebetürmodul für ein erfindungsgemäßes Kraftfahrzeug angesehen. Gleiches gilt für ein Verfahren zum Öffnen und Schließen einer Schiebetür eines erfindungsgemäßen Kraftfahrzeugs.

Das Schiebetürmodul umfasst dabei zumindest ein Fenstermodul. Das Fenstermodul umfasst zumindest ein öffnungs- und schließfähiges Fenster, Mittel zur Durchführung der Öffnungs- und Schließbewegung des Fensters sowie Mittel zur Erfassung des Schließ- bzw. Öffnungszustands des Fensters. Die Mittel zur Erfassung des Schließ- bzw. Öffnungszustands des Fensters werden dabei von zumindest einem Sensor gebildet. Das Fenstermodul kann ein Schiebefenstermodul und/oder ein Hebe/Senkfenstermodul und/oder ein Kippfenstermodul und/oder ein Schwenkfenstermodul ein.

Der Sensor zur Erfassung des Schließzustandes des Fensters ist vorzugsweise in oder an einer Führungsschiene einer beweglichen Fensterscheibe und/oder in einer vorzugsweise in oder an einer am Fensterrahmen des Fenstermoduls angeordneten Scheibenaufnahme des Fenstermoduls angeordnet. Er kann jedoch auch in oder an Scharnierelementen des Fenstermoduls angeordnet sein, deren Relativbewegungen zueinander von dem Sensor erfaßt werden und die Rückschlüsse auf die Fensterstellung zulassen.

Bei dem Verfahren zum Schließen oder Öffnen einer fremdkraftbetätigten Schiebetür eines Kraftfahrzeugs, die bei einer vollständigen Öffnungs- bzw. Schließbewegung einen Verfahrbereich durchfährt, wird von einem in der Schiebetür oder in der feststehenden Fahrzeugkarosserie in unmittelbarer Nähe zum Verfahrbereich angeordneten Fenstermodul mit einem öffnungs- und schließfähigen Fenster der Schließzustand des Fensters durch Steuermittel vor und/oder während der Öffnung erfaßt und abhängig vom erfaßten Schließzustand des Fensters wird die Öffnungs- oder Schließbewegung der Schiebetür durch die Steuermittel zugelassen, verzögert, unterbunden oder in diese eingegriffen.

Insbesondere kann nach Erfassung des Schließzustands der Fenster der Öffnungs- oder Schließvorgang der Schiebetür solange durch die Steuermittel verzögert werden, bis die Fenster, insbesondere fremdkraftbetätigt durch Initiierung einer Steuereinrichtung, vollständig oder zumindest teilweise geschlossen worden sind.

Hinsichtlich der sich durch das Fenstermodul und durch das Verfahren ergebenden erfindungsgemäßen Vorteile wird auf die Beschreibung des erfindungsgemäßen Kraftfahrzeugs verwiesen.

Der allgemeine Erfindungsgedanke lässt sich auch auf ähnliche Bereiche eines Kraftfahrzeugs, z.B. eine Kombination eines automatischen Cabrioverdecks mit eingelassenem Schiebedach, oder auf andere Fahrzeugarten wie Züge oder Schiffe sinngemäß übertragen. Auch ist die Anwendung der Erfindung bei einer nicht fremdkraftbetätigten Schiebetür nicht ausgeschlossen. Hier könnten beispielsweise Blockiereinrichtungen die Mechanik des Öffnungsmechanismus bis zur Schließung der Fenster blockieren.

Weitere Merkmale und Vorteile der Erfindung ergeben sich aus den Unteransprüchen und aus der nachfolgenden Beschreibung bevorzugter Ausführungsbeispiele anhand der Zeichnungen.

### Kurze Beschreibung der Zeichnungen

In den Zeichnungen zeigen

Fig. 1 eine schematische Darstellung einer Schiebetür eines erfindungsgemäßen Kraftfahrzeugs in geschlossener Position und

Fig. 2 die schematische Darstellung der Schiebetür aus Fig.1 zwischen geschlossener und vollständig geöffneter Position.

### Bester Weg zur Ausführung der Erfindung

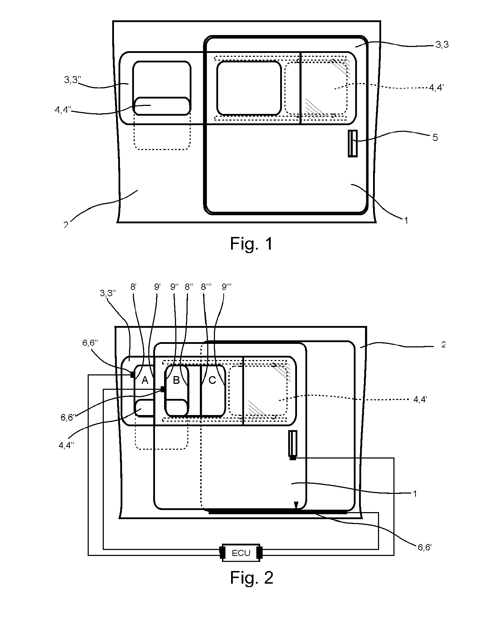

Fig.1 zeigt eine schematische Darstellung einer fremdkraftbetätigten Schiebetür 1 eines erfindungsgemäßen Kraftfahrzeugs in geschlossener Position. Die Schiebetür 1 ist innerhalb eines feststehenden Teils der Fahrzeugkarosserie 2 in bekannter Weise angeordnet. Nicht dargestellt sind Antriebseinheit und Antriebsmittel zur Fremdkraftbetätigung, die vorzugsweise elektrisch betrieben werden.

Sowohl in der feststehenden Karosserie 2 als auch in der Schiebetür 1 sind Fenstermodule 3 mit öffnungs- und schließfähigen Fenstern 4 angeordnet. In Fig.1 sind beide Fenster 4 beispielhaft mit geöffneten Fensterscheiben gezeigt. Die Fenstermodule 3 umfassen neben den Fenstern 4 die für Fenstermodule 3 üblichen Funktionselemente (Führungsschienen und -bolzen, Wassermanagementsysteme, Dichtungselemente, Griffelemente, Antriebseinheiten zur Fremdkraftbetätigung, Mittel zur Verbindung mit der Karosserie etc.), auf deren Darstellung hier verzichtet ist.

Das in der Schiebetür 1 angeordneten Fenstermodul 3' umfasst beispielhaft ein Schiebefenster 4', angedeutet durch die gestrichelt dargestellte Linie, die eine bewegliche Fensterscheibe zeigt. Bei dem in der feststehenden Karosserie angeordneten Fenstermodul 3 handelt es sich um ein Hebe/Senkfenstermodul 3" mit einer innerhalb der Karosserie versenkbaren Fensterscheibe in nicht vollständig geöffneter Position.

Die Schiebetür 1 weist ferner ein Aktivierungsmittel 5, hier beispielhaft in Form eines Türgriffs, auf. Selbstverständlich kann ein solches Aktivierungsmittel 5 auch durch ein andersartiges Schaltelement gebildet sein. Auch dessen Anordnung kann beliebig sein und sich etwa auf dem Armaturenbrett, der Bedienkonsole oder an einem anderen Ort im Inneren des Fahrzeugs oder außen am Fahrzeug befinden.

In Fig.2 ist die Schiebetür 1 des erfindungsgemäßen Kraftfahrzeugs aus Fig.1 in einer geöffneten, jedoch nicht vollständig geöffneten Position dargestellt. Im Gegensatz zu Fig.1 sind in Fig.2 auch diverse Sensoren 6 in schematischer Weise gezeigt. Bei den Sensoren 6 kann es sich um jegliche Art von Messwertaufnehmern handeln. Je nach Positionierung, zu erfassender Messgröße und Anordnung wird man sich für einen geeigneten Sensor 6 entscheiden. Der Sensor 6" unterhalb der Unterkante der Schiebetür 1 erfaßt hier beispielhaft die genaue Position der Schiebetür 1 in deren Verfahrbereich.

Die Sensoren 6', die in den Fenstermodulen 3, insbesondere in Führungsschienen oder Scheibenaufnahmen der Fenster 4, angeordnet sind, erfassen lediglich, ob das jeweilige Fenster geschlossen oder geöffnet ist. Natürlich ist es auch möglich, Sensoren 6' vorzusehen, die die genaue Fensterposition erfassen bzw. Sensoren 6" vorzusehen, die nur feststellen, ob die Schiebetür 1 geöffnet ist. Will man lediglich die Schiebetürbewegung von dem Öffnungs- bzw. Schließzustand der Fenster 4 bzw. Fenstermodule 3 abhängig machen, ohne die Schiebetürposition selbst zu berücksichtigen, und nicht umgekehrt die Möglichkeit einer Fensteröffnung von dem Öffnungs- und Schließzustand der Schiebetür, kann man natürlich auch auf die Sensoren zur Erfassung des Öffnungs- und Schließzustandes der Schiebetür 1 oder auf Sensoren 6" zur Erfassung der Schiebetürposition verzichten.

Die Signale der Sensoren 6 werden, entweder permanent, in Abständen intermittierend oder auf Anfrage durch eine zentrale Steuereinheit 7 (ECU - Electronic Control Unit) kabelgebunden auf elektrischem Wege oder per Funktechnologie an diese übertragen. Wird die Öffnung der Schiebetür 1, etwa durch Betätigung der Aktivierungsmittel 5 angefordert, ermittelt die Steuereinheit 7 die Öffnungszustände der Fenstermodule 3, die sich in unmittelbarer Nähe zum Verfahrbereich der Schiebetür 1 befinden.

Je nach ermitteltem Öffnungszustand lässt die Steuereinheit 7 die fremdkraftbetätigte Bewegung der Schiebetür 1 zu und initiiert diese oder blockiert bzw. verzögert diese. Sofern die Fenstermodule 3 selbst über ansteuerbare Mittel zur fremdkraftbetätigten Öffnungs- und Schließbewegung verfügen, initiiert die Steuereinheit 7 einen Schließvorgang der Fenster 4. Nach Schließen der Fenster 4 veranlasst die Steuereinheit 7 dann die Öffnungsbewegung der Schiebetür 1. Ebenfalls denkbar ist, dass eine Anforderung, die Fenster 4 zu öffnen, erst nach Erfassung der Schiebetürposition umgesetzt wird oder, sofern diese geöffnet ist, geblockt wird. Eine Öffnung der Fenster 4 wird zweckmäßiger Weise so lange blockiert, bis die Schiebetür vollständig geschlossen ist.

### Weg(e) zur Ausführung der Erfindung

Die in Fig.2 dargestellte Kombination aus Schiebetürposition und Fenstermodulposition ist rein exemplarisch dargestellt, um einige Bereiche zu illustrieren, in denen es möglicher Weise zu Verletzungen oder Sachbeschädigungen kommen kann. Die dargestellten Positionen würden insbesondere bei Anwendung des vorgenannten Verfahrens bei einer fremdkraftbetätigten Öffnungsbewegung so nicht auftreten, da einer fremdkraftbetätigten Öffnung der Schiebetür 1 gemäß der Erfindung ein Schließen der Fenstermodule 4 vorangehen soll. Eine manuelle Öffnung der Schiebetür sollte hingegen im Sinne der Erfindung vorzugsweise möglich bleiben. Die Buchstaben A, B und C kennzeichnen drei Bereiche, in denen es Verletzungs- oder Sachbeschädigungsrisiken existieren, die die Erfindung zu minimieren sucht. In diesen Bereichen können insbesondere Karosseriekanten 8 und Schiebetürkanten 9 Scherstellen bilden oder in den Verfahrbereich ragende Fremdkörper erfassen.

Im Bereich A kann insbesondere bei einer Öffnungsbewegung der Schiebetür 1 ein in den Verfahrbereich der Schiebetür 1 ragender Fremdkörper durch eine hintere Schiebetürkante 9' erfaßt werden oder zwischen der Schiebetürkante 9' und der linken feststehenden Kante 8' des Fenstermoduls 4" eingeklemmt werden.

In Bereich B kann insbesondere bei einer Schließbewegung der Schiebetür 1 ein in den Verfahrbereich der Schiebetür 1 ragender Fremdkörper zwischen der linken Kante 9" des in der Schiebetür befindlichen Fenstermoduls 4' und der rechten feststehenden Kante 8" des Fenstermoduls 4" eingeklemmt werden. Bei einer vollständigen Öffnung der Schiebetür kann ferner auch die er rechte Kante 9''' des in der Schiebetür befindlichen Fenstermoduls 4' einen Fremdkörper in Bereich B erfassen.

In Bereich C kann bei einer Schließbewegung ein Fremdkörper durch die linke Kante 9" des in der Schiebetür befindlichen Fenstermoduls 4' erfaßt werden. Bei einer Öffnungsbewegung besteht eine Möglichkeit des Einklemmens zwischen der feststehenden Karosseriekante 8''' und der rechten Kante 9''' des in der Schiebetür befindlichen Fenstermoduls 4'.

**Bezugszeichenliste**

1 Schiebetür

2 Fahrzeugkarosserie

3 Fenstermodul

4 Fenster

5 Aktivierungsmittel

6 Sensor

7 Steuereinheit

8 Karosseriekante

9 Schiebetürkante

## Patentansprüche

1. Kraftfahrzeug mit zumindest einer längs einer Seite des Kraftfahrzeugs verfahrbaren, über eine Fremdkraft betätigten Schiebetür (1), die während einer Öffnungs- und Schließbewegung einen Verfahrbereich durchfährt, sowie zumindest einem in der Schiebetür (1) oder in dem feststehenden Teil der Fahrzeugkarosserie (2) angeordneten Fenstermodul (3) mit einem wenigstens teilweise innerhalb des Verfahrbereichs angeordneten, öffnungs- und schließfähigen Fenster (4), wobei das Kraftfahrzeug Steuermittel zum Vermeiden eines unbeabsichtigten Einklemmen von Fremdkörpern oder Körperteilen aufweist, **dadurch gekennzeichnet, dass** die Steuermittel derart ausgebildet sind, daß sie den Schließ- und/oder Öffnungszustand des Fensters (4) zu erfassen und abhängig vom erfaßten Schließzustand des Fensters (4) eine Bewegung der Schiebetür (1) zumindest in Schließrichtung durch Unterbrechen oder Reduzieren der Fremdkraft im Falle eines gefährdeten Zustandes zu verhindern und/oder zu stoppen vermögen, wobei der gefährdete Zustand **dadurch** definiert ist, daß die Schiebetür (1) bei geöffnetem Fenster (4) vor eine von dem Fenster (4) freigegebene Öffnung in dem Fenstermodul (3) zu verfahren droht.

2. Kraftfahrzeug nach Anspruch 1, **dadurch gekennzeichnet, dass** die Steuermittel derart ausgebildet sind, daß sie eine Bewegung der Schiebetür nur bei geschlossenem Fenster zulassen.

3. Kraftfahrzeug nach Anspruch 1 oder 2, **dadurch gekennzeichnet, dass** das öffnungs- und schließfähige Fenster (4) motorisch angetrieben ist und die Steuermittel Mittel zum Erfassen eines kritischen Widerstandes des Fensters aufweisen und derart ausgebildet sind, daß sie bei Schließen der Schiebetür (1) zunächst eine Schließbewegung des Fensters (4) veranlassen und bei Blockieren der Schließbewegung des Fensters (4) infolge eines Erkennens des kritischen Widerstand den Antrieb der Schiebetür (1) unterbrechen, wobei die Schließbewegung des Fensters (4) gegenüber der Bewegung der Schiebetür (1) einen derartigen Vorlauf aufweist, daß der gefährdete Zustand verhindert ist.

4. Kraftfahrzeug nach einem der vorhergehenden Ansprüche, **dadurch gekennzeichnet, dass** die Steuermittel derart ausgebildet sind, daß sie bei Erkennen eines gefährdeten Zustandes die Umkehr der Bewegung der Schiebetür (1) zu veranlassen vermögen.

5. Kraftfahrzeug nach einem der vorhergehenden Ansprüche, **dadurch gekennzeichnet, dass** die Steuermittel zumindest einen Sensor (6,6") zur Erfassung des Schließ- und/oder Öffnungszustandes der Fenster (4) aufweisen.

6. Kraftfahrzeug nach einem der vorhergehenden Ansprüche, **dadurch gekennzeichnet, dass** die Steuermittel zumindest einen Sensor (6,6") zur Erfassung des Schließ- und/oder Öffnungszustands der Schiebetür (1) aufweisen.

7. Kraftfahrzeug nach einem der vorhergehenden Ansprüche, **dadurch gekennzeichnet, dass** die Steuermittel eine Steuereinheit (7) zur Steuerung der Öffnungs- und Schließvorgänge und zur Verarbeitung von Signalen von Sensoren (6) zur Erfassung der Öffnungs- bzw. Schließzustände der Schiebetür (1) und der Fenster (4) umfassen.

8. Kraftfahrzeug nach einem der vorhergehenden Ansprüche, **dadurch gekennzeichnet, dass** die Steuermittel Blockiereinrichtungen umfassen, die eine Bewegung der Schiebetür ganz oder teilweise unterbinden.

9. Kraftfahrzeug nach einem der vorhergehenden Ansprüche, **dadurch gekennzeichnet, dass** die Steuermittel derart ausgestaltet sind, dass sie einen manuellen, nicht fremdkraftbetätigten Öffnungs- oder Schließvorgang der Schiebetür (1) unabhängig von dem gefährdeten Zustand zulassen.

10. Kraftfahrzeug nach einem der vorhergehenden Ansprüche, **dadurch gekennzeichnet, dass** die Steuermittel Verzögerungseinrichtungen umfassen, die die selbsttätige Bewegung der Schiebetür bis zu einem Zeitpunkt verzögern, in dem eine Bewegung Schiebetür (1) gefahrlos möglich ist.

11. Kraftfahrzeug mit einem motorisch betriebenen Fenster (4) nach dem vorhergehenden Anspruch, **dadurch gekennzeichnet, dass** die Steuermittel Mittel zum Speichern des Öffnungszustandes des Fenster (4) aufweisen und derart ausgebildet sind, daß sie bei gewünschtem Schließen der Schiebetür (1) zunächst den Öffnungszustand des Fensters (4) speichern und das Schließen des Fensters (4) bewirken, nach Erfassung des komplikationslosen Schließen des Fensters (4) die Schiebetür (1) schließen und anschließend das Fenster (4) wieder bis zum ursprünglichen Öffnungszustand öffnen.

12. Kraftfahrzeug nach einem der vorhergehenden Ansprüche, **dadurch gekennzeichnet, dass** Kontrolleinrichtungen vorgesehen sein, die das Öffnen der Fenster (4) bei geöffneter Schiebetür (1) unterbinden.

13. Kraftfahrzeug nach einem der vorhergehenden Ansprüche, **dadurch gekennzeichnet, dass** akustische oder optische Signalgeber vorgesehen sind, die ein Eingreifen der Steuermittel in die Schiebetürbewegung oder deren Unterbinden oder Verzögern durch die Steuermittel anzeigen.

14. Kraftfahrzeug nach einem der vorhergehenden Ansprüche, **dadurch gekennzeichnet, dass** das Fenstermodul (3) ein Schiebefenstermodul und/oder ein Hebe/Senkfenstermodul und/oder ein Kippfenstermodul und/oder ein Schwenkfenstermodul ist.

15. Kraftfahrzeug nach einem der vorhergehenden Ansprüche, **dadurch gekennzeichnet, dass** das Fenstermodul (3) zumindest einen Sensor (6) zur Erfassung des Schließ- und/oder Öffnungszustands des Fensters (4) in oder an einer Führungsschiene einer beweglichen Fensterscheibe und/oder in einer vorzugsweise in oder an einer am Fensterrahmen des Fenstermoduls (3) angeordneten Scheibenaufnahme des Fenstermoduls (3) aufweist.

16. Kraftfahrzeug nach einem der vorhergehenden Ansprüche, **dadurch gekennzeichnet, dass** das Fenstermodul (3) zumindest einen Sensor (6) zur Erfassung des Schließ- und/oder Öffnungszustands in oder an Scharnierelementen des Fenstermoduls (3) aufweist, deren Relativbewegungen zueinander von dem Sensor (6) erfaßt werden.

17. Fenstermodul (3) für ein Kraftfahrzeug nach einem der Ansprüche 1 bis 16, umfassend zumindest ein öffnungs- und schließfähiges Fenster (4) und Mittel zur Durchführung der Öffnungs- und Schließbewegung des Fensters (4), **dadurch gekennzeichnet, dass** das Fenstermodul (3) Mittel zur Erfassung des Schließ- und/oder Öffnungszustands des Fensters (4) aufweist.

18. Fenstermodul (3) nach Anspruch 17, **dadurch gekennzeichnet, dass** Mittel zur Erfassung des Schließ- und/oder Öffnungszustands des Fensters (4) zumindest einen Sensor (6") umfassen.

19. Fenstermodul (3) nach Anspruch 17 oder 18, **dadurch gekennzeichnet, dass** das Fenstermodul (3) ein Schiebefenstermodul und/oder ein Hebe/Senkfenstermodul und/oder ein Kippfenstermodul und/oder ein Schwenkfenstermodul ist.

20. Fenstermodul (3) nach einem Anspruch 18 oder nach Anspruch 19 und Anspruch 18, **dadurch gekennzeichnet, dass** der Sensor (6") zur Erfassung des Schließ- und/oder Öffnungszustandes des Fensters (4) in einer Führungsschiene einer beweglichen Fensterscheibe und/oder in einer vorzugsweise in oder an einer am Fensterrahmen des Fenstermoduls angeordneten Scheibenaufnahme des Fenstermoduls (3) angeordnet ist.

21. Fenstermodul (3) nach einem der Ansprüche 17 bis 20, **dadurch gekennzeichnet, dass** das Fenstermodul (3) zumindest einen Sensor (6") zur Erfassung des Schließzustands in oder an Scharnierelementen des Fenstermoduls (3) aufweist, deren Relativbewegungen zueinander von dem Sensor (6") erfaßt werden.

22. Fenstermodul (3) nach einem der Ansprüche 17 bis 20, **dadurch gekennzeichnet, dass** es ein fremdkraftbetätigtes Fenster (4), insbesondere ein elektrisch betätigtes Fenster (4), aufweist.

23. Schiebetürmodul für ein Kraftfahrzeug nach einem der Ansprüche 1 bis 16 mit einem Fenstermodul nach einem der Ansprüche 17 bis 22.

24. Verfahren zum Schließen oder Öffnen einer fremdkraftbetätigten Schiebetür eines Kraftfahrzeugs, die bei einer vollständigen Öffnungs- bzw. Schließbewegung einen Verfahrbereich durchfährt, **dadurch gekennzeichnet, dass** von einem in der Schiebetür oder in der feststehenden Fahrzeugkarosserie in unmittelbarer Nähe zum Verfahrbereich angeordneten Fenstermodul (3) mit einem öffnungs- und schließfähigen Fenster (4) der Schließ- und/oder Öffnungszustand des Fensters durch Steuermittel vor und/oder während der Öffnung erfaßt wird und abhängig vom erfaßten Schließ- und/oder Öffnungszustand des Fensters (4) die Öffnungs- oder Schließbewegung der Schiebetür (1) durch die Steuermittel zugelassen, verzögert, unterbunden oder in diese eingegriffen wird.

25. Verfahren nach Anspruch 24, **dadurch gekennzeichnet, dass** nach Erfassung des Schließ- und/oder Öffnungszustands der Fenster (4) der Öffnungs- und/oder Schließvorgang der Schiebetür solange durch die Steuermittel verzögert wird, bis die Fenster (4), insbesondere fremdkraftbetätigt durch Initiierung einer Steuereinrichtung (7), vollständig oder zumindest teilweise geschlossen worden sind.
